# EUROPEAN PATENT SPECIFICATION

(11) **EP 1 427 769 B1**
(45) Date of publication and mention of the grant of the patent: **31.12.2008**
(21) Application number: 02766224.6
(22) Date of filing: 30.08.2002
(51) Int. Cl.: C08G 63/48, C09D 167/08

(54) **LOW VOC NON-AQUEOUS DISPERSION COATINGS**
NICHTWÄSSRIGE DISPERSIONSBESCHICHTUNGEN MIT GERINGEM LEICHTFLÜCHTIGEM ORGANISCHEM ANTEIL
REVETEMENTS EN DISPERSION NON AQUEUSE A FAIBLE TENEUR EN COMPOSES ORGANIQUES VOLATILS

(30) Priority: 30.08.2001 US 316150 P
(43) Date of publication of application: 16.06.2004
(73) Proprietor: THE SHERWIN-WILLIAMS COMPANY, Cleveland Ohio 44115-1075 (US)
(72) Inventor: CROYLE, Matthew, V., Shaker Heights, OH 44120 (US); MCJUNKINS, Joseph, L., Berea, OH 44017 (US); RAO, Madhukar, Twinsburg, OH 44087 (US); TOMKO, Richard, F., North Olmsted, OH 44070 (US)
(74) Representative: Morf, Jan Stefan
(86) International application number: PCT/US2002/028051
(87) International publication number: WO 2003/020791

(56) References cited:
- EP-A- 0 555 503
- EP-A- 0 555 504

## Description

### CROSS-REFERENCE TO RELATED APPLICATION

This application claims the benefit of U.S. Provisional Application No. 60/316,150 filed August 30, 2002.

### FIELD OF THE INVENTION

The present invention relates to non-aqueous dispersion (NAD) resins having solids content of greater than 90%, and more preferably, greater than 95%, and coatings comprising these NADs.

### BACKGROUND OF THE INVENTION

Although NADs having nearly 100% solids content are known in which oils such as soya oil, linseed oil, or castor oil are used as the carrier solvent, these NADs tend to exhibit very long dry times and very soft films, even with added metal driers to promote auto-oxidation. Typically, coatings produced from natural oils require high oven temperatures, and extended time to develop hard films. According to this invention, a fast cure, high solids, low VOC, low bake coating is taught, wherein the inclusion of multifunctional isocyanates, and optionally, metallic driers for oxidative cure, provide faster dry times and harder films.

Non-aqueous dispersions made from drying oils or blown oils to make nearly 100% solids coatings has been disclosed in British Patent 1408471 assigned to Dai Nippon Toryo Kabushiki Kaisha. The oils acted as the stabilizer for an acrylic core. These NADs were promoted as sealants because as stated at page 4, lines 75-79 of the patent, "[a]fter coating and sealing, the surface becomes dry but the interior remains soft; therefore, cracks are not formed even after use for a long time." The '471 patent does not teach the use of hydroxyl-functional monomers and crosslinking agents such as isocyanates. British Patent 1319781 assigned to Imperial Chemical Industries, Limited describes an NAD prepared from a poly(methyl methacrylate) backbone grafted with linseed copolymer. Example 2 of the '781 patent describes the preparation of a 100% solids film forming NAD by evaporating ethyl acetate from a solution containing the dissolved NAD and linseed oil. The NAD was cured by auto-oxidation. The specification of the patent on page 3, lines 114-124, states, "[a]lthough micro-particles of the kind described can be used in stoving compositions and compositions in which the crosslinking reaction is broadly of the condensation type (for example hydroxyl/isocyanate, hyroxyl/N-methylol, epoxy/carboxy), they are particularly suitable for use in compositions in which the crosslinks are formed by an auto-oxidation reaction involving auto-oxidative groups such as those present in drying oils and derivatives thereof."

The addition of isocyanate or blocked isocyanate crosslinkers to NADs has been taught in several patents to cure NADs. Dai Nippon Toryo Company, Ltd's U.S. Patent Number 3,926,875, teaches acrylic core NADs stabilized with alkyds containing blocked isocyanates and isocyanate-reactive moieties such as hydroxyl groups either on the stabilizer or in the acrylic core or contained in both the stabilizer and acrylic core. All examples of the '875 patent contain hydrocarbon solvents.

U.S. Patent Number 4,138,376 to Imperial Chemical Industries describes the preparation of a coating from a blend of a polyisocyanate dispersion and a solution of an alkyd resin. All alkyds were in a solvent comprising a major proportion of aliphatic hydrocarbons. The cure was between isocyanate groups and isocyanate reactive groups.

U.S. Patent Number 3,652,472 assigned to Balm Paints Limited describes NADs curable with crosslinking agents such as isocyanates, melamine resins, etc and optionally in addition to auto-oxidation. The dispersions all contained hydrocarbon solvents.

U.S. Patent Number 4,530,957 to Ford Motor Company describes NADs internally crosslinked with melamine resins, isocyanates, etc. and then blended with hydroxyl functional oligomers to form a cured coating when baked with melamine resins. All NADs contained organic solvents.

British patent application GB 2179047 assigned to Kansai Paint describes NADs containing perfluoroalkyl groups. Example 10 shows the NAD blended with another resin and cured with isocyanates. All examples contain solvent.

U.S. Patent Number 5,173,533 assigned to Kansai Paint describes storage stable NADs in which the core and shell contain complementary reactive groups such as hydroxyl/isocyanate . Upon evaporation of solvent, the complementary reactive groups on the shell and core interact to form cured coatings.

U.S. Patents 4,640,935 and 4,588,830 assigned to Dow Chemical describe NAD polyols containing addition polymerized monomers. The NADs are assumed to be 100% solids. These polyol NADs are reacted with isocyanates to make foams, elastomers and plastics. Natural oils are not mentioned.

U.S. Patents 4,983,716 and 6,051,633 assigned to The Sherwin-Williams Company teach NADs in general.

None of the above patents teach fast cure, high solids, low VOC and low bake non-aqueous dispersions and coatings with high pencil hardness utilizing natural oils.

### SUMMARY OF THE INVENTION

The present invention relates to a coating composition comprising:
alkyd medium by reactions comprising free radical polymerization of:
   (a) a non-aqueous dispersion which is formed in an alkyd medium by reactions comprising free radical polymerization of:
      (i) an alkyd formed by a two-step process, wherein the first step comprises an acidolysis reaction of a triglyceride oil with a trifunctional carboxylic acid or trifunctional anhydride, and the second step comprises reacting the product of the first step with a multi-functional alcohol;
      (ii) at least one hydroxy-functional monomer;
      (iii) at least one monomer capable of copolymerizing with the hydroxy-functional monomer by a free radical addition reaction mechanism;
      wherein the alkyd and a natural oil are used as a polymerization medium for the polymerizable monomers; and wherein the non-aqueous dispersion has a non-volatile materials content of greater than 90%; and
   (b) between 1% to 60% by weight, based on the weight of the nonaqueous dispersion, of a multifunctional isocyanate, wherein the ratio of NCO/OH equivalents is in the range from at least 0.3/1.0 to 1.5:1.0.

### DETAILED DESCRIPTION OF THE INVENTION

The NAD used in this invention comprises an oil-modified alkyd as the dispersing medium, either alone or in combination with a natural oil, for the polymerization of unsaturated monomers in which the polymers formed from the free radical polymerization are predominantly insoluble in the alkyd medium.

### ALKYD

The alkyd used in these NADs is not formed by any of the traditional processes such as fatty acid esterification or alcoholysis of a drying oil with later reaction with a di- or tribasic acid. Rather, the alkyds used in this invention are formed by a two-step process, wherein the first step comprises the acidolysis reaction of a triglyceride oil with a trifunctional carboxylic acid or a trifunctional anhydride, and the second step comprises reacting the product of the first step with a multifunctional alcohol. The alkyds of this invention differ from the conventional alkyds in that a much higher molecular weight can be achieved without an unacceptable increase in viscosity. Highly branched alkyds provide the basis for a high solids, low VOC composition. The high molecular weight of such a composition enables the air dry time of the composition to be very short.

The triglyceride oil used in the formation of the alkyd can be selected from the group consisting of linseed oil, soya oil, coconut oil, cottonseed oil, peanut oil, canola oil, corn oil, safflower oil, sunflower oil, epoxidized oils (such as epoxidized soya oil), dehydrated castor oil, fish oil, perilla, lard, walnut oil, tung oil and the like, and mixtures thereof. Particularly preferred for certain applications of this invention are those oils containing unsaturation in the glyceride chains, such as soya oil, dehydrated castor oil and linseed oil.

To form the alkyd, the triglyceride oil is first reacted via an acidolysis reaction with a trifunctional carboxylic acid such as trimelletic acid, trimesic acid, 1,3,5-pentane tricarboxylic acid, citric acid or a trifunctional anhydride such as trimelletic anhydride, pyromelletic anhydride, or mixtures of such acids and/or anhydrides to produce an acid functional alkyd reaction product. For many applications of this invention, it is especially preferred to utilize trifunctional anhydrides. The proportion of triglyceride oil to acid (or anhydride) and the processing conditions should be such that the reaction product will be acid functional. Frequently, the acid value of this product would be at least 20 and would frequently range from 20 to 120. Generally the ratio of moles trifunctional acid:oil should be approximately 1:1.75 to 1:1. The oil and the acid (or anhydride) should be charged into a reactor equipped with an inert gas blanket and a mechanical stirrer. The two reactants should be heated to a temperature greater than or equal to about 232 °C (450° F), preferably to a temperature of about 249 °C (480° F). This temperature should be held for a sufficient time period to allow for the desired degree of completion of the reaction of the two reactants. Typically, at this temperature, the reaction takes approximately one hour. If desired, a reaction catalyst such as lithium hydroxide monohydrate, barium hydroxide, or di-butyl tin oxide can be added in an amount of approximately 0.02% by weight of oil. The acid-functional intermediate produced by this acidolysis reaction should be cooled to about 177 °C (350° F) in preparation for the second step of the reaction.

The intermediate from the acidolysis step is further reacted with a multifunctional alcohol. The amount of multifunctional alcohol should be such that the moles of hydroxyl equivalents contributed by the alcohol is in excess over the moles of carboxylic acid equivalents contributed by the acid or anhydride. Thus, the equivalent ratio of alcohol groups to acid groups for this reaction would typically be at least 1:1 and could range to about 1.5:1 or higher. The multifunctional alcohol can be selected from the group consisting of trimethylol propane, trimethylol ethane, glycerine, tris hydroxyethyl isocyanurate,-and the like, and mixtures thereof, either alone or in combination with a difunctional alcohol selected from the group consisting of ethylene glycol, propylene glycol, cyclohexane dimethanol, and mixtures thereof. Additionally, dimethylol propionic acid can be used in combination with the multifunctional alcohol. Trifunctional alcohols are particularly preferred due to the degree of branching they allow. Difunctional alcohols, if used, are preferably used as a minor component in combination with trifunctional alcohols. The alcohol is preferably added in bulk to the reaction vessel containing the product of the acidolysis reaction, although the alcohol can be added in two or more charging stages. The temperature is raised to between about 218°C (425° F) and 260°C (500° F) and these reaction conditions are maintained for so long as necessary to bring the acid value of the solution below about 15, preferably below about 10. If desired during this stage of the reaction, xylene or other azeotroping solvent can be added to the vessel to facilitate the removal of water from the reaction solution.

Depending on the desired molecular weight and viscosity, a portion of monofunctional alcohol, or monobasic acid such as soya fatty acid, linseed oil fatty acid or crotonic acid, up to about 20% by weight of the total alkyd can be added with the multifunctional alcohol to control molecular weight and act as a chain stopper.

The order of reactions, i.e. acidolysis with a trifunctional acid or anhydride, followed by reaction of that product with a multifunctional alcohol, is critical to the formation of the high molecular weight, low viscosity alkyd of this invention. The amounts of oil, acid and alcohol used should be such that the resulting alkyd has a high degree of branching, a z-average molecular weight, M_{z}, greater than or equal to about 20,000, an oil length of between about 65% and 85%, and a hydroxyl number less than 60, preferably less than 45. These alkyds have non-volatile materials contents approaching 100% NVM. The alkyd is especially suitable for use in non-aqueous dispersions as a dispersing medium, either alone or in combination with some amount of natural oil, to act as the polymerizing medium and to disperse insoluble monomers and polymers.

### NON-AQUEOUS DISPERSION

When preparing non-aqueous dispersions using the novel alkyd above, the monomers should be selected from monomers which would produce a polymer via a free radical addition reaction mechanism. More specifically, there should be at least one monomer containing hydroxy functionality, and at least one monomer capable of polymerizing with the hydroxy-functional monomer by a free radical additional reaction mechanism. The hydroxy-functional monomer can be present at levels greater than 5%. Most preferably, between about 5% and 35% by weight of the monomer charge comprises hydroxy functional monomers. Representative hydroxy-functional monomers include hydroxy ethyl acrylate and methacrylate, hydroxy propyl acrylate and methacrylate, and the like.

Representative monomers which are copolymerizable with the hydroxy functional, monomers by a free radical addition reaction mechanism include: acrylonitrile, methacrylonitrile, acrylic acid, methacrylic acid, itaconic acid, and esters of these acids, especially methyl acrylate and methacrylate, ethyl acrylate and methacrylate, butyl acrylate and methacrylate, lauryl acrylate and methacrylate, and the like, trimethylol propane triacrylate and trimethacrylate, hexanediol diacrylate, acrylamide, methacrylamide, vinyl chloride, vinylidene chloride, styrene, divinyl benzene, vinyl toluene, vinyl naphthalene and mixtures thereof. In addition to pure monomers, preformed polymers and polymeric intermediates can be included in the reaction charge. Other reactive materials including multifunctional epoxides, melamines and isocyanates could also be included. Preferably, the monomers copolymerizable with the hydroxy-functional monomer are present in the monomer charge at levels greater than 5%, and preferably between 65-95% by weight of the total monomer charge.

To prepare the non-aqueous dispersions of this invention, the alkyd dispersing medium is used as the polymerization medium for the monomer charge. The alkyd medium can be diluted with a natural oil such as soya oil or the other natural oils such as those useful in the production of the alkyd itself, if desired. Alternatively, reactive oils with low and high levels of conjugation (sunflower, soya, linseed, and castor oil) could be used to dilute the alkyd. If it is desired to include a natural oil as part of the dispersing medium, it can be included at levels up to about 40%, and generally at levels of 10 to 30% of the total weight of alkyd and natural oil.

All free radical addition reactants are preferably added via dropwise addition over a period of time to the alkyd dispersing medium. The monomer charge can be added pure, or, in an embodiment which is preferred for some applications, the monomers can be dispersed in an amount of the alkyd of this invention prior to addition to the dispersing medium. The amount of alkyd used for such a dispersion should be included in the calculation of the overall amount of alkyd present in the reaction vessel.

The total amount of alkyd contained in the reaction vessel, including any alkyd which may be added with the monomer charge, can comprise between 25% to 99%, preferably from 30% to 60%, most preferably between 40% to 55%, by weight of the combined total alkyd and total monomer charged to the vessel. The free radical addition monomer charge should, after completely added to the reaction vessel, account for 1% to 75%, preferably between 40% to 70%, by weight of the total alkyd and total monomer charged to the vessel, most preferably between 45% to 60%. A chain transfer agent such as methyl mercapto-propionate or 2-mercapto ethanol must also be added to the vessel in an amount from 0.1% to 6.0% by weight of monomer. An initiator, such as t-butyl peroctoate, t-amyl peroctoate, cumene hydroperoxide, and t-butyl perbenzoate is also preferably added.

The temperature of the solution in the reaction vessel should be maintained between 93°C (200° F) and 121°C (250° F) for the entire period that monomer charge is being added. Upon completion of the monomer addition, a chaser composition, such as vanadium naphthenate to the reactor followed by cumene hydroperoxide is added over a period of about 90 minutes. Upon completion of the chase composition, the temperature should be maintained between 93°C (200° F) and 121°C (250° F) for approximately one hour. At the end of that hour, the heat is removed and the contents of the vessel are filtered. Although it is not our intent to be bound by theory, it is believed that at least some graft copolymerization takes place between the polymerization medium and the growing free-radical polymer thereby further enhancing the performance of the final NAD.

The NADs made using these alkyds typically have NVM's of about 95% or more, have very low viscosities, often less than about 7.5 Pa.s (7500 Cps), have volatile organic contents less than 100 g/l, preferably less than 25 g/l, and exhibit excellent air dry times using conventional metallic drier compounds. The NADs of this invention can be cured utilizing drying agents well-known in the art. Drying agents can comprise standard metallic and rare earth driers such as cobalt, calcium, potassium, barium, zinc, manganese, tin, aluminum, zirconium and vanadium napthenates, octoates, hexanates, and isodecanoates. A particularly preferred drier composition is a combination of cobalt, calcium and zirconium driers present in an amount from about 0.1 % to about 2.5% by weight of the coating composition.

In accordance with the present invention, the NAD of this invention is blended with a polyisocyanate or blocked polyisocyanate crosslinking (curing) agent, which is capable of reacting with the hydroxy functionality present on the NAD to facilitate reduced curing time and/or temperatures, higher solids, a low VOC, and harder films. The multifunctional polyisocyanate or blocked polyisocyanate crosslinking agent is at from 1% to 60% by weight solids relative to the NAD. Useful ranges for the level of polyisocyanate are frequently 10 to 30%, by weight of the NAD. On an equivalents basis, the polyisocyanate is present at a level to provide of a NCO/OH ratio from at least 0.3/1.0 and to as high as 1.5/1.0.

Typical isocyanate crosslinking agents which may be used for curing the composition include aliphatic, aromatic, cycloaliphatic diisocyanates, triisocyanates, polyisocyanates, and polymers, blocked and unblocked. Examples of suitable polyisocyanates include, but are not limited to, the adducts or prepolymers of those aliphatic and aromatic di- and tri-isocyanates which are already known to be useful in the preparation of coatings and can be selected from the group consisting of m- and p-phenylene diisocyanate, trimethylene diisocyanate; tetramethylene diisocyanate; pentamethylene diisocyanate; hexamethylene diisocyanate; ethylethylene diisocyanate, 2,3-dimethylethylene diisocyanate; I-methyltrimethylene diisocyanate; 1,3-dicyclopentylene diisocyanate; 1,4-cyclohexylene diisocyanate; 1,2-cyclohexylene diisocyanate; 1,3-pheylene diisocyanate; 1,4-phenylene diisocyanate; 2,4-toluylene diisocyanate; 2,6-toluylene diisocyanate; 4,4'-biphenylene diisocyanate; 1,5-naphthylene diisocyanate; 1,4-naphthylene diisocyanate; 1-isocyanatomethyl-5-isocyanatocyclohexyl)-methane; bis-(4-isocyanato-phenyl)-methane; 4,4'-diisocyanatodiphenyl ether; 2,3-bis-(8-isocyanatooctyl)-4-octyl-5-hexylcyclohexane; 1,3-bis(1-isocyanato-1-methylethyl)benzene; 4,4'- and 2,4'-diisocyanato-dipheylmethane, 4,4'-diisocyanato-2,2'-disphenylpropane, tetramethylene-1,4-diisocyanate; dicyclohexylmethane diisocyanate, isophorone diisocyanate, biurets, allophanates and isocyanurates of these polyisocyanates; and mixtures thereof. Particularly useful isocyanates are the biurets, allophonates and isocyanurates of 1,6-hexamethylene diisocyanate such as Desmodur^{®} N3600 polyisocyanate (commercially available from Bayer), polyisocyanate trimer (Tolonate^{®} HDT-LV from Rhodia, Inc., Cranbury, New Jersey), or the like. The blend may contain a suitable catalyst for the reaction of the isocyanate groups, for example, dibutyl tin dilaurate, in a proportion of, for example, 0.01 - 0.5% by weight based on the weight of isocyanate.

The non-aqueous dispersions of this invention can be used alone with a multifunctional isocyanate as coating compositions, or, in the alternative, they can be formulated with other readily available, standard paint ingredients and components such as rheology modifiers, pigments, fillers, plasticizers, antioxidants, thixatropes, extenders, colors and pigments, solvents, diluents or reactive diluents, anti-skinning agents, drying agents, dispersants and surfactants, fungicides, mildewcides, preservatives, UV absorbers, anti-marring agents, flow and leveling agents, fragrances, defoaming agents, chelating agents, flattening agents, and anti-rusting agents.

Suitable rheology modifiers are well known in the art and can comprise organoclays, fumed silica, dehydrated castor oil organic derivatives (exemplary tradenames: Thixatrol® (Elementis Specialties, Inc., New Jersey); Flowtone® (English China Clay), polyamide resins, polyamide modified alkyds, MPA-60 (Elementis Specialties, Inc.), alkylbenzene sulphonate derivatives, aluminum, calcium and zinc stearates, calcium soyate, and the like.

Suitable extenders are also well known in the art and can comprise amorphous, diatomaceous, fumed, quartz and crystalline silica, clays, aluminum silicates, magnesium aluminum silicates, talc, mica, delaminated clays, calcium carbonates and silicates, gypsum, barium sulfate, zinc, calcium zinc molybdates, zinc oxide, phosphosilicates and borosilicates of calcium, barium and strontium, barium metaborate monohydrate, and the like.

Suitable pigments are well known in the art and can comprise for example, titanium dioxide, carbon black, graphite; ceramic black, antimony sulfide, black iron oxide, aluminum pastes, yellow iron oxide, red iron oxide, iron blue, phthalo blue, nickel titanate, dianisidine orange, dinitroaniline orange, imidazole orange, quinacridone red, violet and magenta, toluidine red, molybdate orange, and the like.

Suitable dispersants and surfactants can comprise any of the readily available dispersants and surfactants to the coatings industry, including the anionic and nonionic surfactants, soya lecithin, alkyl ammonium salts of fatty acids, amine salts of alkyl aryl sulfonates, unsaturated organic acids, sulfonated castor oil, mixtures of high boiling point aromatic and ester solvents, sodium salts of aryl sulfonic acid, and the like.

Anti-skinning agents such as methyl ethyl ketoxime, o-cresol, and hydroquinone can be included.

The coatings of this invention may be used with or without driers at ambient cure, or at elevated temperatures. Preferably, the composition is typically baked in a range about 60°C - 71°C (140° F - 160° F), for about 15-45 minutes, to form a coating about 2.54 µm to 76.2 µm (0.1 to 3.0 mils) thick. Tables I - IV below exemplify the advantageous results obtained when 10-30% of a multi-functional isocyanate is blended with the NADs of this invention.

In addition to the above, the non-aqueous dispersions used in this invention are particularly suited for blending with other polymers. If blended with a lower VOC polymer, the non-aqueous dispersions of this invention can produce extremely low VOC coating compositions. If blended with a higher VOC polymer, the non-aqueous dispersions of this invention can help to reduce the overall VOC of such polymer.

The following examples are intended to illustrate the invention but are not presented as limitations upon the scope of the claims.

### EXAMPLE ONE

### PREPARATION OF ALKYD

Charge 14,925 grams of alkali refined soya oil and 2240 grams of trimelletic anhydride to a reactor equipped with inert gas and a mechanical stirrer. Heat the contents to 249°C (480° F) and hold for about one hour. Cool to about 177°C (350° F) and add 1704 grams of trimethylol ethane and 368 grams of xylene. Heat the contents to about 249°C (480° F) and hold for an Acid Value less than or equal to 10. Continue to hold the contents at this temperature until residual xylene is stripped off.

The resulting alkyd has an NVM of approximately 99.5%, a Gardner-Holdt viscosity of about X at 25° C, an Acid Value of about 9.9, an M_{z} of about 102,000, an oil length of about 79 and a Hydroxyl No. of about 47.

### EXAMPLE TWO

### PREPARATION OF A CONVENTIONAL NAD

Charge 265 grams of the alkyd prepared according to Example One and 186 grams of mineral spirits to a reactor equipped with nitrogen and a mechanical stirrer. Heat to 110° C. Begin a three hour dropwise addition of Solutions #1 and #2 below:
- Solution #1:: 629 grams of alkyd prepared according to Example One, 795 grams of methyl methacrylate, 298 grams of hydroxy ethyl acrylate, and 5.8 grams of 2-mercapto ethanol (chain transfer agent).
- Solution #2:: 34.8 grams of mineral spirits and 8.2 grams of t-butyl peroctoate (initiator).
Upon completion of the addition of Solutions #1 and #2, hold for one hour at 110° C, add four (4) drops of vanadium naphthenate to the reactor, and begin a three hour addition of a "chase" comprising 57.1 grams of mineral spirits, and 30.5 grams of cumene hydroperoxide. Hold the temperature at 110° C for approximately one hour after the chase has been completely added.

The resulting non-aqueous dispersion has a NVM of approximately 86.3% and a viscosity of 1,5 Pa.s (1500 centipoise) at 25° C using the Brookfield LVT Spindle #3 at 30 rpm.

### EXAMPLE THREE (Soya Oil)

### PREPARATION OF AN OIL MODIFIED NAD

Charge 418 grams of the alkyd prepared according to Example One and 294 grams of alkali-refined soybean oil to a reactor equipped with nitrogen and a mechanical stirrer. Heat to 110° C. Begin a three hour dropwise addition of Solutions #1 and #2 below:
- Solution #1:: 993 grams of alkyd prepared according to Example One, 1254 grams of methyl methacrylate, 470 grams of hydroxy ethyl acrylate, and 9.3 grams of 2-mercapto ethanol (chain transfer agent).
- Solution #2:: 54.9 grams of alkali-refined soybean oil and 12.9 grams of t-butyl peroctoate (initiator).
Upon completion of the addition of Solutions #1 and #2, hold temperature for one hour at 110° C, add two (2) drops of vanadium naphthenate to the reactor, then flush reaction lines with alkali-refined soybean oil. Begin a three hour addition of a "chase" comprising 90 grams of alkali refined soybean oil, and 48.1 grams of cumene hydroperoxide. Hold the temperature at 110° C for approximately 45 minutes after the chase has been completely added.

The resulting non-aqueous dispersion has a NVM of approximately 97.7% and a viscosity of 8,18 Pa.s (8180 centipoise) at 25° C using the Brookfield LVT Spindle #3 at 12 rpm.

### EXAMPLE FOUR (Linseed Oil)

### PREPARATION OF AN OIL MODIFIED NAD

Charge 325 grams of the alkyd prepared according to Example One and 229 grams of supreme linseed oil to a reactor equipped with nitrogen and a mechanical stirrer. Heat to 110° C. Begin a three hour dropwise addition of Solutions #1 and #2 below:
- Solution #1:: 772 grams of alkyd prepared according to Example One, 976 grams of methyl methacrylate, 366 grams of hydroxy ethyl acrylate, and 7.2 grams of 2-mercapto ethanol (chain transfer agent).
- Solution #2:: 42.7 grams of supreme linseed oil and 10.1 grams of t-butyl peroctoate (initiator).
Upon completion of the addition of Solutions #1 and #2, hold temperature for one hour at 110° C, add five (5) drops of vanadium naphthenate to the reactor, then flush reaction lines with supreme linseed oil. Begin a three hour addition of a "chase" comprising 70 grams of supreme linseed oil and 37.4 grams of cumene hydroperoxide. Hold the temperature at 110° C for approximately 45 minutes after the chase has been completely added.

The resulting non-aqueous dispersion has a NVM of approximately 98.1% and a viscosity of 6,32 Pa.s (6,320 centipoise) at 25° C using the Brookfield LVT Spindle #3 at 12 rpm.

### EXAMPLE FIVE (Castor Oil)

### PREPARATION OF AN OIL MODIFIED NAD

Charge 265 grams of the alkyd prepared according to Example One and 186 grams of raw castor oil to a reactor equipped with nitrogen and a mechanical stirrer. Heat to 110° C. Begin a three hour dropwise addition of Solutions #1 and #2 below:
- Solution #1:: 629 grams of alkyd prepared according to Example One, 795 grams of methyl methacrylate, 298 grams of hydroxy ethyl acrylate, and 5.8 grams of 2-mercapto ethanol (chain transfer agent).
- Solution #2:: 34.8 grams of raw castor oil and 8.2 grams of t-butyl peroctoate (initiator).
Upon completion of the addition of Solutions #1 and #2, hold temperature for one hour at 110° C, five (5) drops of vanadium naphthenate to the reactor, then flush reaction lines with raw castor oil. Begin a three hour addition of a "chase" comprising 57.1 grams of raw castor oil, and 30.5 grams of cumene hydroperoxide. Hold the temperature at 110° C for approximately 45 minutes after the chase has been completely added.

The resulting non-aqueous dispersion has a NVM of approximately 96.0% and a viscosity of 6,80 Pa.s (6800 centipoise) at 25° C using the Brookfield LVT Spindle #3 at 12 rpm.

### COMPARATIVE EXAMPLES OF ISOCYANATE-CURED CONVENTIONAL ALKYDS AND OIL-MODIFIED ALKYDS

Conventional NAD of Example Two and the Oil Modified NAD of Example Three were blended with 10-30% (by weight of NAD solids) of polyisocyanates HDT-LV (available from Rhodia), or alternatively, Desmodur^{®} N3600 (available from Bayer). The isocyanates were added to the NADs with 0.01 weight percent dibutyl tin dilaurate, manually stirred, coated on Bonderite^{®} panels and allowed to dry at ambient temperature. The coated panels were aged for 7 days and then tested for pencil hardness.

| **NAD** | **Isocyanate** | **Pencil Hardness** | **VOC** | **NVM** | **Dry Time** |
|---|---|---|---|---|---|
| Conventional 86% NVM | -0- | < B | 250 | 85% | 4 hours |
| 100% NVM | -0- | <6B | - 0 | 97.5 | tacky |
| Conventional 86% NVM | 10% HDT-LV | B | < 150 | 85% | 30 min |
| Conventional 86% NVM | 20% HDT-LV | B | < 150 | 85% | 15 min. |
| Conventional 86% | 10% N-3600 | HB | <150 | 85% | 30 min. |
| Conventional 86% | 20% N-3600 | B | <150 | 85% | 15 min. |
| 100% NVM | 10% HDT-LV | 2B | - 0 | 97.5% | 30 min. |
| 100% NVM | 20% HDT-LV | 2B | - 0 | 97-5% | 15 min. |
| 100% NVM | 10% N-3600 | 2B | - 0 | 97.5% | 45 min. |
| 100% NVM | 20% N-3600 | 2B | - 0 | 97.5% | 30 min. |

### Low Bake Tests

I. Low Bake Test: 30 minute at 60°C (140° F)

| **NAD** | **Isocyanate** | **Gloss** | **Pencil Hardness** | **VOC** | **NVM** | **Dry Time** |
|---|---|---|---|---|---|---|
| Conventional 86% | 10% HDT-LV | 97 | B | < 150 | 85% | 30 min |
| Conventional 86% | 10% N-3600 | 97 | HB | < 150 | 85% | 30 min |
| 100% NVM | 10% HDT-LV | 90 | 2B | < 25 | 97.5% | 45 min |
| 100% NVM | 10% N-3600 | 90 | 2B | <25 | 97.5% | 45 min |

II. Low Bake Test: 15 minutes at 68°C (155° F) with Driers ⁽¹⁾

| **NAD** | **Isocyanate** | **Gloss** | **Pencil Hardness** | **VOC** | **NVM** | **Dry Time** |
|---|---|---|---|---|---|---|
| Conventional 86% | 20% HDT-LV | 97 | B | < 150 | 85% | 15 min |
| Conventional 86% | 20% N-3600 | 98 | B | < 150 | 85% | 15 min |
| 100% NVM | 20% HDT-LV | 95 | 28 | <25 | 97.5% | 30 min |
| 100% NVM | 20% N-3600 | 97 | 2B | < 25 | 97.5% | 30 min |

III. Low Bake Test: 15 minutes at 60°C (140° F) with Drier ⁽¹⁾

| **NAD** | **Isocyanate** | **Gloss** | **Pencil Hardness** | **VOC** | **NVM** | **Dry Time** |
|---|---|---|---|---|---|---|
| Conventional 86% | 30% HDT-LV | 102 | B | < 150 | 85% | 15 min |
| Conventional 86% | 30% N-3600 | 103 | B | < 150 | 85% | 15 min |
| 100% NVM | 30% HDT-LV | 100 | B | <25 | 97.5% | 15 min |
| 100% NVM | 30% N-3600 | N/a | N/a | < 25 | 97.5% | 15 min |

| | | | | | | |
|---|---|---|---|---|---|---|
| ⁽¹⁾ driers were a combination of Co/CA/ZR | | | | | | |

## Claims

1. A coating composition comprising:
(a) a non-aqueous dispersion which is formed in an alkyd medium by reactions comprising free radical polymerization of:
(i) an alkyd formed by a two-step process, wherein the first step comprises an acidolysis reaction of a triglyceride oil with a trifunctional carboxylic acid or trifunctional anhydride, and the second step comprises reacting the product of the first step with a multi-functional alcohol;
(ii) at least one hydroxy-functional monomer;
(iii) at least one monomer capable of copolymerizing with the hydroxy-functional monomer by a free radical addition reaction mechanism;
wherein the alkyd and a natural oil are used as a polymerization medium for the polymerizable monomers; and wherein the non-aqueous dispersion has a non-volatile materials content of greater than 90%; and
(b) between 1% to 60% by weight, based on the weight of the nonaqueous dispersion, of a multifunctional isocyanate, wherein the ratio of NCO/OH equivalents is in the range from at least 0.3/1.0 to 1.5:1.0.

2. The coating composition of claim 1, wherein the alkyd has a non-volatile materials content greater than 95%.

3. The coating composition of claim 1, wherein the alkyd has a z-average molecular weight, M_{z}, greater than 20,000.

4. The coating composition of claim 1, wherein the alkyd has an oil length of between 65% to 85%.

5. The coating composition of claim 1, wherein the alkyd has an hydroxyl number of less than 60.

6. The coating composition of claim 1, further comprising rheology modifiers, pigments, fillers, plasticizers, antioxidants, thixatropes, extenders, colors and pigments, solvents, diluents or reactive diluents, anti-skinning agents, drying agents, dispersants and surfactants, fungicides, mildewcides, preservatives, UV absorbers, anti-marring agents, flow and leveling agents, fragrances, defoaming agents, chelating agents, flattening agents, and/or anti-rusting agents.

7. The coating composition of claim 1, wherein the volatile organic content of the coating composition is less than 25 grams/liter.

8. The coating composition of claim 1, wherein the nonvolatile materials content of the coating composition is greater than 95%.

9. A process for producing a coating composition, comprising:
a) forming a nonaqueous dispersion comprising polymerizing:
a. an alkyd formed by a two-step process, wherein the first step comprises an acidolysis reaction of a triglyceride oil with a trifunctional carboxylic acid or trifunctional anhydride, and the second step comprises reacting the product of the first step with a multi-functional alcohol;
b. at least one hydroxy-functional monomer; and
c. at least one monomer capable of copolymerizing with the hydroxy-functional monomer by a free radical addition reaction mechanism;
wherein the alkyd and a natural oil are used as a polymerization medium for the polymerizable monomers; and wherein the non-aqueous dispersion has a non-volatile materials content of greater than 90%; and
b) blending a multifunctional isocyanate with the nonaqueous dispersion, in an amount of between 1% by weight to 60% by weight, based on the weight of the nonaqueous dispersion.

## Patentansprüche

1. Eine Beschichtungszusammensetzung, enthaltend:
(a) eine nichtwässrige Dispersion, die in einem Alkydmedium gebildet wird durch Reaktionen, umfassend die radikalische Polymerisation von:
(i) einem Alkyd, gebildet durch ein zweistufiges Verfahren, wobei der erste Schritt eine Acidolysereaktion eines Triglyceridöls mit einer trifunktionellen Carbonsäure oder einem trifunktionellen Anhydrid umfasst und der zweite Schritt die Umsetzung des Produkts aus dem ersten Schritt mit einem multifunktionellen Alkohol umfasst,
(ii) wenigstens einem hydroxyfunktionellen Monomer,
(iii) wenigstens einem Monomer, das mit dem hydroxyfunktionellen Monomer durch einen radikalischen Additionsreaktionsmechanismus copolymerisieren kann,
wobei das Alkyd und ein natürliches Öl als ein Polymerisationsmedium für die polymerisierbaren Monomere verwendet werden und wobei die nichtwässrige Dispersion einen Gehalt an nichtflüchtigen Materialien von mehr als 90% besitzt, und
(b) zwischen 1 Gew.-% und 60 Gew.-%, bezogen auf das Gewicht der nichtwässrigen Dispersion, eines multifunktionellen Isocyanats, wobei das NCO/OH-Äquivalente-Verhältnis im Bereich von wenigstens 0,3/1,0 bis 1,5:1,0 liegt.

2. Die Beschichtungszusammensetzung nach Anspruch 1, wobei das Alkyd einen Gehalt an nichtflüchtigen Materialien von mehr als 95% besitzt.

3. Die Beschichtungszusammensetzung nach Anspruch 1, wobei das Alkyd ein z-gemitteltes Molekulargewicht, M_{z}, von mehr als 20000 besitzt.

4. Die Beschichtungszusammensetzung nach Anspruch 1, wobei das Alkyd eine Öllänge zwischen 65% und 85% besitzt.

5. Die Beschichtungszusammensetzung nach Anspruch 1, wobei das Alkyd eine Hydroxylzahl von weniger als 60 besitzt.

6. Die Beschichtungszusammensetzung nach Anspruch 1, ferner enthaltend Rheologie-Modifizierungsmittel, Pigmente, Füllstoffe, Plastifizierungsmittel, Antioxidationsmittel, Thixotropiemittel, Streckungsmittel, Farbmittel und Pigmente, Lösungsmittel, Verdünnungsmittel oder reaktive Verdünnungsmittel, Hautverhinderungsmittel, Trockenmittel, Dispersionsmittel und Tenside, Fungizide, Mittel gegen Mehltau, Konservierungsmittel, UV-Absorptionsmittel, Mittel gegen Verderben, Fließ- und Egalisiermittel, Duftstoffe, Entschäumungsmittel, Chelatbildner, Mattierungsmittel und/oder Rostschutzmittel.

7. Die Beschichtungszusammensetzung nach Anspruch 1, wobei der Gehalt an flüchtigen organischen Bestandteilen der Beschichtungszusammensetzung kleiner als 25 Gramm/Liter ist.

8. Die Beschichtungszusammensetzung nach Anspruch 1, wobei der Gehalt an nichtflüchtigen Materialien der Beschichtungszusammensetzung größer als 95% ist.

9. Ein Verfahren zur Herstellung einer Beschichtungszusammensetzung, umfassend:
a) Bilden einer nichtwässrigen Dispersion, umfassend die Polymerisation von:
a. einem Alkyd, gebildet durch ein zweistufiges Verfahren, wobei der erste Schritt eine Acidolysereaktion eines Triglyceridöls mit einer trifunktionellen Carbonsäure oder einem trifunktionellen Anhydrid umfasst und der zweite Schritt die Umsetzung des Produkts aus dem ersten Schritt mit einem multifunktionellen Alkohol umfasst,
b. wenigstens einem hydroxyfunktionellen Monomer und
c. wenigstens einem Monomer, das mit dem hydroxyfunktionellen Monomer durch einen radikalischen Additionsreaktionsmechanismus copolymerisieren kann,
wobei das Alkyd und ein natürliches Öl als ein Polymerisationsmedium für die polymerisierbaren Monomere verwendet werden und wobei die nichtwässrige Dispersion einen Gehalt an nichtflüchtigen Materialien von mehr als 90% besitzt, und
b) Vermischen eines multifunktionellen Isocyanats mit der nichtwässrigen Dispersion in einer Menge zwischen 1 Gew.-% und 60 Gew.-%, bezogen auf das Gewicht der nichtwässrigen Dispersion.

## Revendications

1. Composition de revêtement comprenant :
(a) une dispersion non aqueuse qui est formée dans un milieu alkyde par des réactions comprenant la polymérisation radicalaire libre de :
(i) un alkyde formé par un procédé en deux étapes, dans lequel la première étape comprend une réaction d'acidolyse d'une huile de triglycéride avec un acide carboxylique trifonctionnel ou un anhydride trifonctionnel, et la deuxième étape comprend la réaction du produit de la première étape avec un alcool multifonctionnel ;
(ii) au moins un monomère à fonctionnalité hydroxy ;
(iii) au moins un monomère capable de copolymérisation avec le monomère à fonctionnalité hydroxy par un mécanisme de réaction d'addition radicalaire libre ;
dans laquelle l'alkyde et une huile naturelle sont utilisés en tant que milieu de polymérisation pour les monomères polymérisables ; et dans laquelle la dispersion non aqueuse a une teneur en matières non volatiles supérieure à 90 % ; et
(b) de 1 % à 60 % en poids, par rapport au poids de la dispersion non aqueuse, d'un isocyanate multifonctionnel, où le rapport des équivalents NCO/OH est dans la plage d'au moins 0,3/1,0 à 1,5/1,0.

2. Composition de revêtement selon la revendication 1, dans laquelle l'alkyde a une teneur en matières non volatiles supérieure à 95 %.

3. Composition de revêtement selon la revendication 1, dans laquelle l'alkyde a un poids moléculaire moyen en Z, M_{z}, supérieur à 20 000.

4. Composition de revêtement selon la revendication 1, dans laquelle l'alkyde une teneur en huile de 65 % à 85 %.

5. Composition de revêtement selon la revendication 1, dans laquelle l'alkyde a un indice d'hydroxyle de moins de 60.

6. Composition de revêtement selon la revendication 1, comprenant en outre des modificateurs de rhéologie, des pigments, des charges, des agents plastifiants, des antioxydants, des thixatropes, des matières de charge, des couleurs et des pigments, des solvants, des diluants ou des diluants réactifs, des agents antipeaux, des agents siccatifs, des dispersants et des tensioactifs, des fongicides, des agents anti-moisissures, des conservateurs, des absorbeurs d'UV, des agents anti-tâches, des agents d'écoulement et d'étalement, des parfums, des agents antimousse, des agents chélatants, des agents de matité, et/ou des agents antirouille.

7. Composition de revêtement selon la revendication 1, dans laquelle la teneur en composés organiques volatils de la composition de revêtement est inférieure à 25 g/litre.

8. Composition de revêtement selon la revendication 1, dans laquelle la teneur en matières organiques non volatiles de la composition de revêtement est supérieure à 95 %.

9. Procédé de production d'une composition de revêtement comprenant :
a) la formation d'une dispersion non aqueuse comprenant la polymérisation de :
a. un alkyde formé par un procédé en deux étapes, dans lequel la première étape comprend une réaction d'acidolyse d'une huile de triglycéride avec un acide carboxylique trifonctionnel ou un anhydride trifonctionnel, et la deuxième étape comprend la réaction du produit de la première étape avec un alcool multifonctionnel ;
b. au moins un monomère à fonctionnalité hydroxy ; et
c. au moins un monomère capable de copolymérisation avec le monomère à fonctionnalité hydroxy par un mécanisme de réaction d'addition radicalaire libre ;
dans lequel l'alkyde et une huile naturelle sont utilisés en tant que milieu de polymérisation pour les monomères polymérisables ; et dans lequel la dispersion non aqueuse a une teneur en matières non volatiles supérieure à 90 % ; et
b) le mélange d'un isocyanate multifonctionnel avec la dispersion non aqueuse, en une quantité de 1 % à 60 % en poids, par rapport au poids de la dispersion non aqueuse.
